# EUROPÄISCHE PATENTSCHRIFT

(11) **EP 0 340 446 B1**
(45) Veröffentlichungstag und Bekanntmachung des Hinweises auf die Patenterteilung: **06.10.1993**
(21) Anmeldenummer: 89105334.0
(22) Anmeldetag: 25.03.1989
(51) Int. Cl.: A01C 11/00

(54) **Pflanzensetzmaschine**
Transplanter
Planteuse-repiqueuse

(30) Priorität: 30.03.1988 DE 8804306 U; 30.04.1988 DE 8805773 U; 30.04.1988 DE 8805772 U; 30.04.1988 DE 8805771 U; 08.04.1988 DE 8804679 U
(43) Veröffentlichungstag der Anmeldung: 08.11.1989
(73) Patentinhaber: Wagner, Jürgen, 67159 Friedelsheim (DE)
(72) Erfinder: Wagner, Jürgen, 67159 Friedelsheim (DE)
(74) Vertreter: Fischer, Wolf-Dieter, Dipl.-Ing.

(56) Entgegenhaltungen:
- DE-A- 2 740 907
- DE-A- 3 310 037
- DE-A- 3 611 786
- DE-C- 898 524
- FR-A- 1 074 522
- FR-A- 2 616 419
- US-A- 1 765 468
- US-A- 3 643 611
- US-A- 4 750 439

## Beschreibung

Die Erfindung betrifft einen Pflanzenhalter für eine pflanzensetzmaschine, der an einer umlaufenden Förderkette befestigt ist, wobei zwei gegeneinander verschwenkbare, vertikal zu einer mit der Förderkette verbundenen Grundplatte stehende Greiferarme mit Greiffingern vorgesehen sind, und an den Greiffingern jeweils im Abstand zueinander angebrachte V-förmige Bügel vorgesehen sind, wobei sich die freien Drahtschenkel der Bügel des einen Greiffingers mit den freien Drahtschenkeln der Bügel des anderen Greiffingers in der Schließstellung etwas überlappen, so daß ein im wesentlichen geschlossener Rahmen gebildet wird und die Greiferarme mittels Schwenkhebel verschwenkbar sind.

Es ist ein Pflanzenhalter bekannt (DE 33 10 037-A1), der an einer Förderkette des Einlegesystems befestigt ist, wobei zwei gegeneinander verschwenkbare, vertikal stehende Greiferarme vorgesehen sind, die an einer mit der Förderkette verbundenen Grundplatte angeordnet sind. An den Greiferarmen sind jeweils im Abstand zueinander angebrachte V-förmige Bügel vorgesehen, die an Fingern so an den Greiferarmen befestigt sind, daß sich die freien Drahtschenkel der Finger des einen Greiferarmes mit den freien Drahtschenkeln der Finger des anderen Greiferarmes etwas überlappen, so daß zum Halten der Pflanzen ein im wesentlichen geschlossener Rahmen gebildet wird. Weiterhin sind die Greiferarme mit Hilfe von Schwenkhebeln gegeneinander verschwenkbar.

Der wesentliche Nachteil dieser bekannten Ausführungsform eines Pflanzenhalters besteht darin, daß nur Rebpflanzen eingesetzt werden können, während ein universelles Einlegesysteme, d.h. kurze und lange Pflanzen sowie Pflanzenstäbe einzusetzen, damit nicht zu verwirklichen ist. Ein weiterer Nachteil besteht darin, daß ein einzelnes und voneinander unabhängiges Verschwenken der Greiferarme derart, daß zur Aufnahme der Pflanze nur der eine, in Transportrichtung gesehen, vordere Greiferarm geöffnet wird und nach dem Einsetzen der Pflanze der andere Greiferarm geöffnet wird, nicht möglich ist, so daß eine Verletzungsgefahr für die Pflanze besteht. Es ist weiterhin nachteilig, daß der Öffnungswinkel der Greiferarme durch die scherenartige Anordnung begrenzt ist, so daß keine dicken Pflanzen, bzw. Pflanzen in Töpfen und Kartonagen aufgenommen werden können.

Bekannt ist weiterhin ein solcher Pflanzenhalter (US-PS 4 750 439), der aus einem U-förmigen Element mit einem Bodenteil und zwei hochstehenden Abschnitten des "U" besteht, sowie vertikal angeordnete Greiferarme aufweist, die in den Teilen des U-förmigen Teiles gelagert sind, besteht. Der zwischen den beiden Teilen des "U" angeordnete Abschnitt der Greiferarme ist mit einem spiralförmigen Teil versehen, das in einem Teil mit entsprechendem Gegengewinde geführt ist. Durch Hin- und Herbewegung dieses Teiles zwischen den beiden Schenkeln des U-förmigen Teiles werden die Greiferarme verdreht und damit die am Ende angeordneten, aus Gummi bestehenden Finger geschlossen oder geöffnet. Der wesentliche Nachteil dieses bekannten Pflanzenhalters besteht darin, daß die Pflanzen innerhalb des Halters keinerlei Führung erhalten, so daß ein vertikales Einsetzen auch kurzer Pflanzen nicht möglich ist. Ein weiterer Nachteil besteht in der Ausbildung des Verschwenkmechanismus, indem die Haltefinger zwangsweise verschwenkt werden und damit beim Erfassen der Pflanzen diese beschädigt werden können.

Der Erfindung liegt die Aufgabe zugrunde, einen Pflanzenhalter der bekannten Art so auszubilden, daß dieser universell für kurze und lange Pflanzen sowie Pflanzstäbe verwendbar ist und ein genaues senkrechtes Einsetzen dieser Pflanzen und Stäbe gewährleistet ist.

Diese Aufgabe wird nach der Erfindung dadurch gelöst, daß die Förderkette über einseitig gelagerte Umlenkräder geführt wird, daß vertikal auf der Grundplatte eine Stange angeordnet ist, zu deren beiden Seiten die um ihre zur Grundplatte vertikalen Achsen verschwenkbaren Greiferarme angebracht sind, daß die beiden Greiferarme durch je eine Feder in die Schließstellung gedrückt werden, und daß beide Greiferarme je einen ausladenden Arm aufweisen, an dem die Gleiffinger befestigt sind, wobei in der Schließstellung der Greiferarme die ausladenden Arme seitlich zur Förderkette auf die den Kettenradwellen der einseitig gelagerten Umlenkräder gegenüberliegenden Seite hervorragen.

Eine vorteilhafte Ausführungsform besteht darin, daß die Greiffinger des einen Greiferarmes im Abstand zu diesem verstellbar sind und daß die Greiffinger des anderen Greiferarmes an diesem beweglich angeordnet sind.

Eine weitere vorteilhafte Ausgestaltung der Erfindung sieht vor, daß im Bereich der Einlegestelle für das Pflanzgut und die Pflanzstäbe neben der Förderkette eine Einlegevorrichtung für das Pflanzgut und die Pflanzstäbe vorgesehen ist, die im Abstand und im Winkel zur Kette verstellbar ist.

Schließlich wird vorgeschlagen, daß die Einlegevorrichtung einen an einer Verstellasche des Rahmens angeordneten Stab mit einzelnen Haltewinkeln für das Pflanzgut und die Pflanzstäbe aufweist und daß am Stabende eine geschlitzte Auflageplatte angebracht ist.

Die Erfindung bringt insbesondere den Vorteil, daß ein derartiger Pflanzenhalter universell eingesetzt werden kann, d.h. es besteht die Möglichkeit, alle Arten von Pflanzen, in kurzer oder langer Form, wie Reben, Sträucher, Bäume, darüber hinaus Töpfe aus Kunststoff, Karton oder Steingut sowie Pflanzen mit Pflanzstäben einzusetzen. Die derart durch die Pflanzenhalter erfaßten Gegenstände werden hierbei sicher gehalten, ohne daß die Gefahr einer Beschädigung besteht. Im Bereich der Einlegestelle läßt sich der Einlegevorgang weitestgehend automatisieren und damit eine hohe Arbeitsleistung erzielen, indem der in Transportrichtung gesehen vordere Greiferarm geöffnet ist, während sich der andere Greiferarm in der Schließstellung befindet, so daß die Pflanzen an diesem geschlossenen Greiferarm in einer mittigen Halteposition punktgenau und senkrecht eingelegt werden können.

Die Erfindung wird in der nachfolgenden Beschreibung anhand von in den Zeichnungen dargestellten Ausführungsbeispielen näher erläutert.

Es zeigen,
- Fig. 1: eine Ausführungsform einer Pflanzensetzmaschine im Aufriß,
- Fig. 2: die Maschine im Grundriß,
- Fig. 3: eine schaubildliche Ansicht der Pflanzenhalter in geöffneter Stellung für eine nicht durchgehende Kettenradwelle,
- Fig. 4: eine Ansicht des Pflanzenhalters in geschlossener Stellung,
- Fig. 5: eine Draufsicht auf die Anordnung der Haitefinger und
- Fig. 6: eine Ansicht der Einlegevorrichtung.

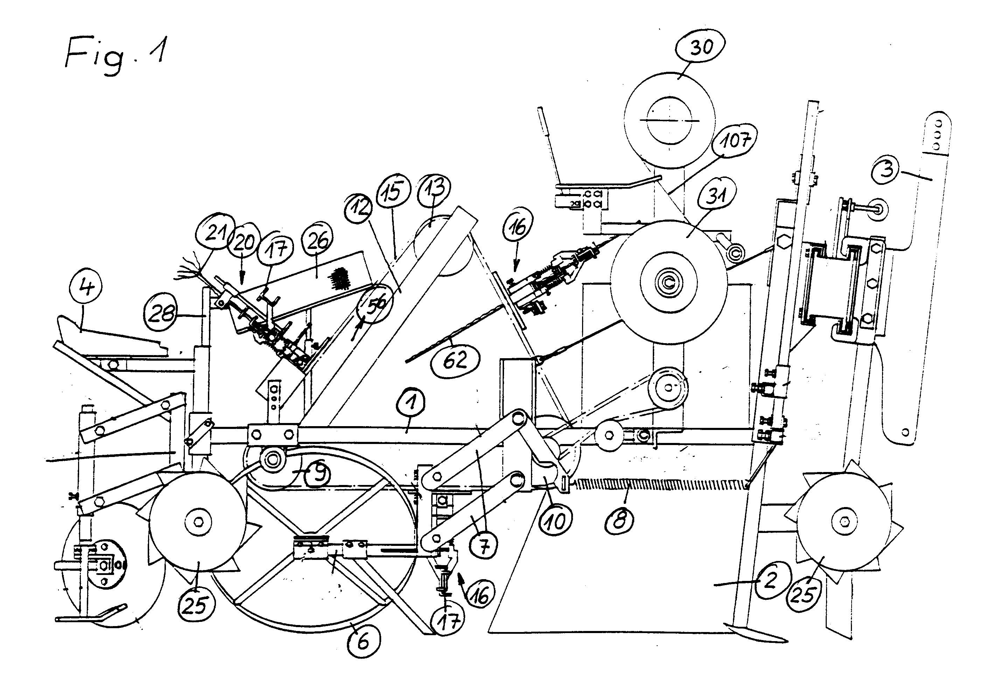

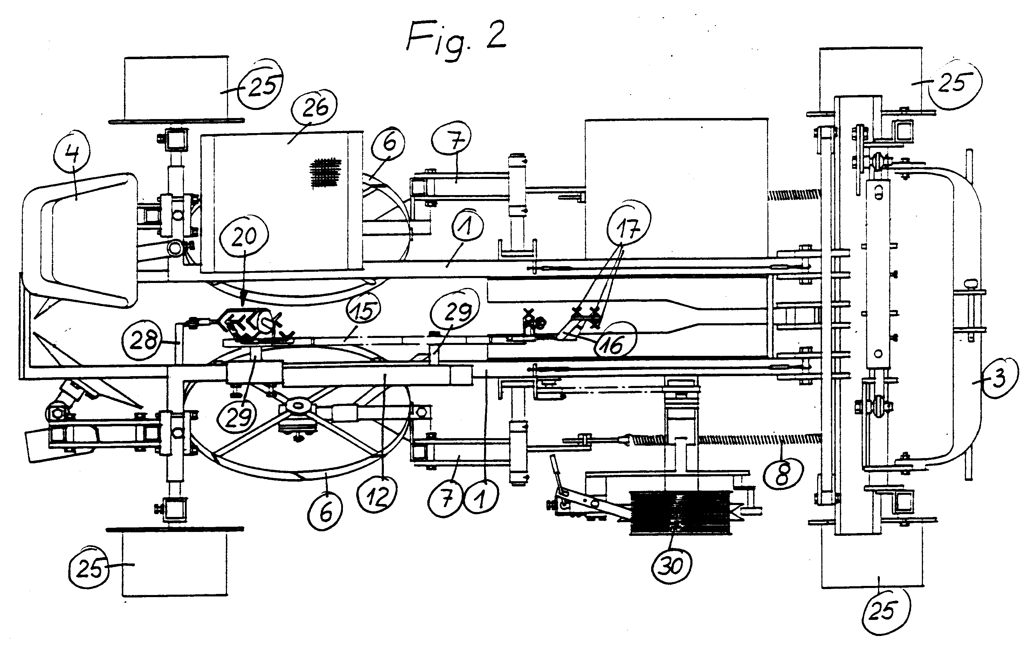

Die in den Figuren 1 und 2 dargestellte Maschine besitzt einen Rahmen 1 als Fahrgestell, an dem in Fahrtrichtung gesehen am vorderen Ende ein Pflanzschar 2 angebracht ist. Weiterhin befindet sich am vorderen Ende eine Dreipunkt-Anhängevorrichtung 3 oder wahlweise eine hydraulisch gesteuerte Verschiebevorrichtung. Weiterhin befindet sich am Ende der Maschine ein Sitz 4. Eine Spule 30 ist für einen Steuerdraht 107 vorgesehen, der über eine Antriebsscheibe 31 läuft. Es sind Andruckräder 6 vorgesehen, die über ein Hebelsystem 7 am Fahrgestell 1 verschwenkbar angebracht sind, wobei am Hebelsystem 7 Zugfedern 8 angreifen, die die Andruckräder 6 gegen den Boden drücken. Weiterhin sind an der Maschine Stützräder 25 angeordnet.

Das am Rahmen 1 angeordnete Einlegesystem weist zwei untere Umlenkräder 9, 10 auf. Oberhalb der Umlenkräder 9, 10 befindet sich ein an einer Stütze 12 angeordnetes drittes Umlenkrad 13, wobei das Umlenkrad 13 höhenverstellbar an der Stütze 12 angeordnet ist. Das Umlenkrad 13 befindet sich in etwa in der Mitte zwischen den beiden unteren Umlenkrädern 9, 10. Das Verschieben des Umlenkrades 13 kann beispielsweise mit Hilfe einer Spindel oder durch ein Hydraulikaggregat erfolgen. Die Umlenkräder 9, 10, 13 sind mit Hilfe einer Förderkette 15 verbunden, an der einzelne Pflanzenhalter mit Greiferarmen 16 angebracht sind.

Die Greiferarme 16 besitzen eine vertikale hochstehende Achse, an deren Ende Greiffinger 17 vorgesehen sind, die an der Achse verschwenkbar sind. Die Steuerung dieser Greiffinger 17 erfolgt mit Hilfe von Anlaufblechen, die in einem Abstand zur Förderkette 15 entsprechend der Höhe der Greiferarme 16 von der Einlegestelle 20 bis hinter die Andruckräder 6 verläuft. Das Öffnen der Greiffinger 17 kann mit Hilfe von ein- oder beidseitig angeordneten Umlenkhebeln erfolgen.

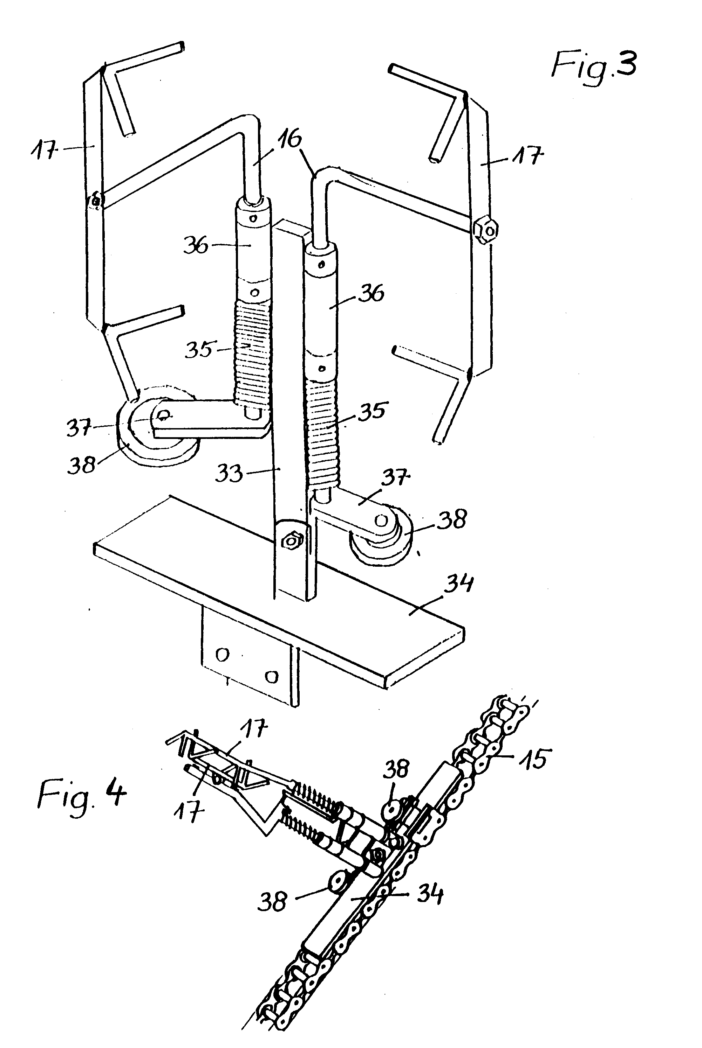

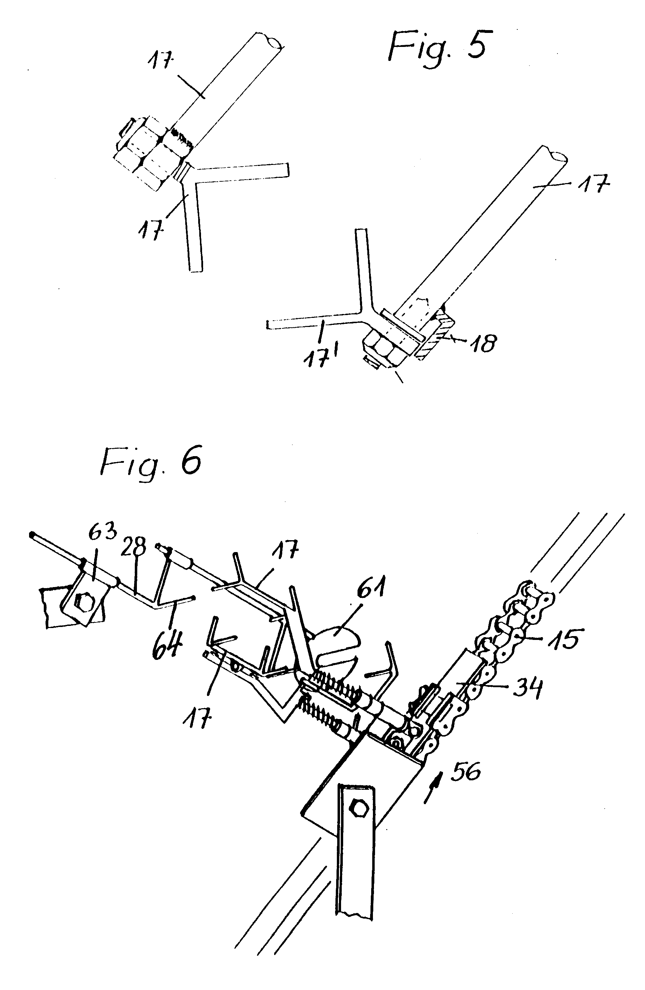

Der in den Figuren 3 und 4 dargestellte Pflanzenhalter wird an einer Förderkette 15 befestigt, die über nicht durchgehende Kettenradwellen 29 läuft. Vertikal zu einer Grund- 34 ist eine Stange 33 angeordnet, wobei zu beiden Seiten dieser Stange 33 Buchsen 36 befestigt sind. In den Buchsen 36 sind zwei Greiferarme 16 als Pflanzenhalter verschwenkbar angeordnet. An den Enden dieser Greiferarme 16 befinden sich Greiffinger 17. Das Öffnen der Greiffinger 17 erfolgt durch an den Greiferarmen 16 befestigte Schwenkhebel 37 mit Anlaufrollen 38, wobei beide Greiferarme 16 durch Federn 35 in die Schließstellung gedrückt werden. In Fig. 5 ist eine verstellbare Ausführungsform für den Greiffinger 17 gezeigt, wobei der Greiffinger 17 verstellbar und der Greiffinger 17' beweglich und mit einem Anschlag 18 versehen ist. Die Beweglichkeit ergibt sich 'dadurch, daß der Greiffinger 17' mehr oder weniger lose auf das Halteteil aufgeschraubt ist.

Die Fig. 6 zeigt die Einlegevorrichtung 28 für kleineres und größeres Pflanzengut 21 und Pflanzstäbe 62, die sich im Bereich der Einlegestelle 20 befindet. Seitlich dazu ist ein Rebenkorb 26 angeordnet. Die Einlegevorrichtung 28 besitzt einen an einer Verstellasche 63 angeordneten Stab mit einzelnen Haltewinkeln 64, wobei sich am Boden dieses Stabes eine mit einem schrägen Schlitz versehene Auflageplatte 61 befindet, damit das Pflanzgut 21 nicht durchfallen kann, jedoch der Pflanzstab 62 eingelegt werden kann. Dadurch ist eine vorzeitige Ablage des Pflanzgutes und/oder Pflanzstabes möglich, wodurch die Arbeitsgeschwindigkeit erhöht werden kann und eine sichere Mitnahme des einzubringenden Gutes gewährleistet ist.

### Bezugszeichenliste

- 1: Rahmen
- 2: Pflanzschar
- 3: 3-Punkt-Anhängevorrichtung
- 4: Sitz
- 6: Andruckräder
- 7: Hebelsystem
- 8: Zugfedern
- 9, 10: Umlenkräder
- 12: Stütze
- 13: drittes Rad - Umlenkrad
- 15: Förderkette
- 16: Greiferarme
- 17, 17': Greiffinger
- 18: Anschlag
- 20: Einlegestelle
- 21: Pflanzgut
- 25: Stützräder
- 26: Rebenkorb
- 28: Einlegevorrichtung für das Pflanzgut und die Pflanzstäbe
- 29: Kettenradwellen, nicht durchgehend
- 30: Spule für Antriebsrad
- 31: Antriebsscheibe
- 33: vertikale Stange
- 34: Grundplatte
- 35: Feder
- 36: Buchsen
- 37: Schwenkhebel
- 38: Anlaufrolle
- 61: geschlitzte Auflageplatte
- 62: Pflanzstäbe
- 63: Verstellasche
- 64: Haltewinkel
- 107: Steuerdraht

## Patentansprüche

1. Pflanzenhalter für eine Pflanzensetzmaschine, der an einer umlaufenden Förderkette (15) befestigt ist, wobei zwei gegeneinander verschwenkbare, vertikal zu einer mit der Förderkette (15) verbundenen Grundplatte (34) stehende Greiferarme (16) mit Greiffingern (17) vorgesehen sind, und an den Greiffingern (17) jeweils im Abstand zueinander angebrachte V-förmige Bügel vorgesehen sind, wobei sich die freien Drahtschenkel der Bügel des einen Greiffingers (17) mit den freien Drahtschenkeln der Bügel des anderen Greiffingers (17) in der Schließstellung etwas überlappen, so daß ein im wesentlichen geschlossener Rahmen gebildet wird, und die Greifferarme (16) mittels Schwenkhebel (37) verschwenkbar sind, dadurch gekennzeichnet, daß die Förderkette (15) über einseitig gelagerte Umlenkräder (9,10,13) geführt wird, daß vertikal auf der Grundplatte (34) eine Stange (33) angeordnet ist, zu deren beiden Seiten die um ihre zur Grundplatte (34) vertikalen Achsen versschwenkbaren Greiferarme (16) angebracht sind, daß die beiden Greiferarme (16) durch je eine Feder (35) in die Schließstellung gedrückt werden, und daß beide Greiferarme (16) je einen ausladenden Arm aufweisen, an dem die Greiffinger (17) befestigt sind, wobei in der Schließstellung der Greiferarme (16) die ausladenden Arme seitlich zur Förderkette (15) auf die den Kettenradwellen (29) der einseitig gelagerten Umlenkräder (9,10,13) gegenüberliegenden Seite hervorragen.

2. Pflanzenhalter nach Anspruch 1, dadurch gekennzeichnet, daß die Greiffinger (17) des einen Greiferarmes (16) im Abstand zu diesem verstellbar sind und daß die Greiffinger (17') des anderen Greiferarmes (16) an diesem beweglich angeordnet sind.

3. Pflanzenhalter nach Anspruch 1 oder 2, dadurch gekennzeichnet, daß im Bereich der Einlegestelle (20) für das Pflanzgut (21) und die Pflanzstäbe (62) neben der Förderkette (15) eine Einlegevorrichtung (28) für das Pflanzgut (21) und die Pflanzstäbe (62) vorgesehen ist, die im Abstand und im Winkel zur Kette (15) verstellbar ist.

4. Pflanzenhalter nach einem der Ansprüche 1 bis 3, dadurch gekennzeichnet, daß die Einlegevorrichtung (28) einen an einer Verstellasche (63) des Rahmens (1) angeordneten Stab mit einzelnen Haltewinkeln (64) für das Pflanzgut (21) und die Pflanzstäbe (62) aufweist und daß am Stabende eine geschlitzte Auflageplatte (61) angebracht ist.

## Claims

1. Plant holder for a transplanter, which plant holder is secured to a continuous supply chain (15), whereby there are provided two gripper arms (16) with gripper fingers (17), the gripper arms being pivotable against each other and mounted vertically to a base plate (34) connected with the supply chain (15), and whereby spaced apart V-shaped clamps are provided on the gripping fingers (17), whereby the free limbs of the clamps of one gripping finger (17) overlap somewhat with the free limbs of the clamps of the other gripping finger (17) in the closed position, so that a substantially closed frame is formed, and whereby the gripper arms (16) can be pivoted by means of pivoting levers (37), characterised in that the supply chain (15) is guided by guide wheels (9,10,13) which are mounted on one side, in that a rod (33) is arranged vertically on the base plate (34), pivotable gripper arms (16) being mounted on both sides of the axis of the rod which is vertical to the base plate (34), in that both gripper arms (16) are pressed into the closed position by a spring (35), and in that each gripper arm (16) is provided with an extension arm on which the gripper fingers (17) are fixed, whereby, in the closed position of the gripper arms (16), the extension arms extend outwardly of the supply chain (15) to the side opposite the chain wheel shafts (29) of the guide wheels (9,10,13) which are mounted on one side.

2. Plant holder as claimed in Claim 1, characterised in that the gripping fingers (17) of one gripper arm (16) are adjustable in separation from the gripper arm and in that the gripper fingers (17') of the other gripper arm (16) are movably arranged on the gripper arm.

3. Plant holder as claimed in Claim 1 or 2, characterised in that an insertion apparatus (28) for the plant material (21) and the plant stems (62) is provided in the region of the insertion point for the plant material (21) and the plant stems (62) near the supply chain (15), which insertion apparatus is adjustable in separation and angle to the chain (15).

4. Plant holder as claimed in one of claims 1 to 3, characterised in that the insertion apparatus (28) is provided with a rod on an adjustment plate (63) of the frame (1) with individual support brackets (64) for the plant material (21) and the plant stems (62), and in that a slotted support plate (61) is mounted on the end of the rod.

## Revendications

1. Porte-plants pour une planteuse-repiqueuse, qui est fixé à une chaîne de transport (15), sachant que sont prévus deux bras de grappin (16) pouvant pivoter l'un vers l'autre et munis de doigts preneurs (17), qui sont placés verticalement sur une plaque de base (34) reliée à la chaîne de transport (15), et que sont prévues des fourchettes en forme de V fixées aux doigts preneurs (17) à une certaine distance l'une de l'autre, sachant également qu'en position fermée, les branches métalliques libres des fourchettes de l'un des doigts preneurs recouvrent quelque peu les branches métalliques libres des fourchettes de l'autre doigt preneur (17), de sorte qu'il se forme un cadre essentiellement fermé, et que les bras de grappin (16) peuvent pivoter au moyen d'un levier de pivotement (37), caractérisé en ce que la chaîne de transport (15) est guidée par des poulies de guidage (9,10,13) montées d'un seul côté, en ce qu'une barre (33), sur les deux côtés de laquelle sont fixés les deux bras de grappin (16) pouvant pivoter autour de leur axe vertical par rapport à la plaque de base (34), est placée verticalement sur la plaque de base (34), en ce que les deux bras de grappin (16) sont poussés chacun en position fermée par un ressort (35), et en ce que les deux bras de grappin (16) présentent chacun un bras en porte à faux auquel sont fixés les doigts preneurs (17), sachant que, lorsque les bras de grappin (16) sont en position fermée, les bras en porte à faux font saillie latéralement par rapport à la chaîne de transport (15) vers le côté opposé aux arbres (29) des barbotins des poulies de guidage (9,10,13) montées d'un seul côté.

2. Porte-plants selon la revendication 1, caractérisé en ce que les doigts preneurs (17) de l'un des bras de grappin (16) peuvent être plus ou moins éloignés de ce dernier et en ce que les doigts preneurs (17') de l'autre bras de grappin (16) sont disposés de manière mobile sur ce dernier.

3. Porte-plants selon la revendication 1 ou 2, caractérisé en ce que dans la zone du point de mise en place (20) du plant (21) et des plantoirs (62), à côté de la chaîne de transport (15), est prévu un dispositif de mise en place (28) du plant (21) et des plantoirs (62), dont l'écart et l'angle par rapport à la chaîne (15) sont réglables.

4. Porte-plants selon l'une des revendications 1 à 3, caractérisé en ce que le dispositif de mise en place (28) présente une tige disposée sur une languette de réglage (63) du cadre (1) et munie de différentes équerres de fixation (64) pour les plants (21) et les plantoirs (62), et en ce qu'une plaque d'appui (61) fendue est fixée à l'extrémité de la tige.
